# EUROPEAN PATENT SPECIFICATION

(11) **EP 0 759 456 B1**
(45) Date of publication and mention of the grant of the patent: **09.04.2003**
(21) Application number: 96202315.6
(22) Date of filing: 19.08.1996
(51) Int. Cl.: C08J 11/08

(54) **Process for recycling polyamide-containing carpet waste**
Verfahren zur Wiederverwertung von Polyamid-haltigen Teppichabfällen
Procédé de recyclage de polyamide à partir de déchets de tapis contenant de polyamide

(30) Priority: 23.08.1995 BE 9500704
(43) Date of publication of application: 26.02.1997
(73) Proprietor: DSM N.V., 6411 TE Heerlen (NL)
(72) Inventor: Booij, Martin, 6151 DH Munstergeleen (NL); Hendrix, Jan Agnes Jozef, 6125 CB Obbicht (NL); Frentzen, Yvonne Helene, 5921 ES Venlo (NL); Beckers, Nicolaas Maria Hendricus, 6267 EB Cadier en Keer (NL)

(56) References cited:
- EP-A- 0 603 434
- DD-A- 7 994
- FR-A- 1 347 566
- US-A- 2 742 440
- US-A- 3 696 058
- US-A- 4 146 704
- US-A- 5 280 105
- CHEMICAL ABSTRACTS, vol. 88, no. 14, 3 April 1978 Columbus, Ohio, US; abstract no. 90675t, NISHIHARA T.: "Manufacture of polyamide fine powder" page 45; column R; XP002000769 & JP-A-52 107 047 (MARUKI SHOKAI KK) 20 August 1975

## Description

The present invention relates to a process for recycling polyamide-containing carpet waste by extracting the polyamide from the carpet waste with an extraction agent and then recovering the polyamide from the extract. Carpet waste usually contains large portions of polymers, and such waste often has a high polyamide content in particular. Attempts are therefore being made to recycle it in order to minimize the amount of polyamide-containing carpet waste that has to be disposed of and in order to recycle its constituents for re-use. In the context of the present invention, the term "carpet waste" covers both the waste formed in the production of polyamide-containing carpets, and old and used carpets discarded by the consumer.

A similar process is known from EP-A-603434, which describes the separation of polyamide from carpet waste by dissolving it in a suitable solvent, and the text mentions as such, concentrated inorganic acids, formic acid and chloroacetic acid, phenols, cresols, alcoholic solutions of alkaline earth halides, aromatic alcohols such as phenylethanol and benzyl alcohol, as well as glycols, lactams and lactones. However, the disadvantage of this method is that the extraction agents used cause problems. Thus, some of these extraction agents (the concentrated inorganic acids) are acidic and react with calcium carbonate, which is often present in the backing layer of carpets. Other extraction agents mentioned (aromatic alcohols, phenols and cresols) give highly viscous polyamide solutions, or they are corrosive (alcoholic solutions of alkaline earth halides).

Furthermore, other polymers present in carpet waste, such as rubbers and polyvinyl chloride, will also dissolve in some of the extraction agents mentioned above. The examples mentioned in EP-A-603434 do not concern a typical carpet waste, no adhesives or calcium carbonate being present.

A further shortcoming of this known process is that extraction agent residues may be left behind in the polyamide end product. This reduces the quality of the polyamides obtained.

The aim of the present invention is to provide a process for recycling polyamide-containing carpet waste by separating the polyamide from it in a way that is free from one or more of the disadvantages mentioned above.

The aim of the present invention is achieved by using an extraction agent that comprises an aliphatic alcohol, with the exception of an alcoholic solution of an alkaline earth halide. The process according to the present invention gives the polyamide in a high yield. It has been found that the other substances normally present in carpets do not interfere with the recycling of the polyamide; this applies e.g. to polypropylene, rubbers, jute, polyurethanes, polyvinyl chloride, acrylate and (meth)acrylate copolymers, polyethylene terephtalate, etc.. Polyamide is separated here from these other components of carpet waste in a highly selective manner. It has also been found that virtually no polyamide is decomposed when it is separated off from the carpet waste by the process according to the invention. Polyamides can be isolated in the present process in relatively few steps.

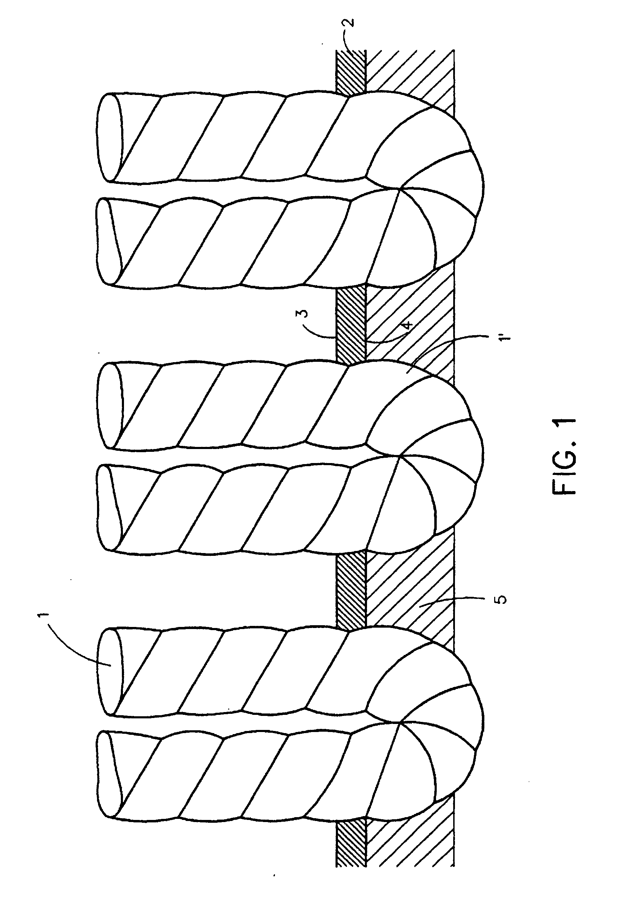

Polyamide carpets generally have the structure shown in Fig. 1. Polyamide-containing pile threads (1) are looped through a woven backing layer (2), which may be made e.g. of a fabric of polypropylene fibres. The pile threads are adhered to the reverse side (4) of the backing with an adhesive (5), such as a styrene-butadiene-rubber latex. The adhesive gives a very firm bond between the backing and the pile threads. However, the process according to the present invention surprisingly permits a good separation of the polyamide from the pile threads in the carpet waste even in the case of such a firm carpet structure.

The polyamides that can be recycled by the process according to the present invention are polyamides that are used in carpets, such as polyamide-6 (PA-6) and polyamide-6,6 (PA-6,6) but also polyamide-4,6 (PA-4,6) and polyamide-12 (PA-12), as well as mixtures thereof.

The alcohols that can be used as the extraction agents for the polyamide are those aliphatic alcohols which dissolve the polyamide to be recycled. Such alcohols are chosen e.g. from the following list: methanol, ethanol, n-propanol, isopropanol, n-butanol, isobutanol, tert-butanol, pentanol, hexanol, 2-ethylbutanol, 4-methylpentanol, 1-heptanol, 2-heptanol, 4-heptanol, 2,4-dimethylpentanol, 1-octanol, 2-octanol, 2-ethylhexanol, 1-nonanol, 2-nonanol, n-decanol, n-undecanol, n-dodecanol, n-tridecanol, n-tetradecanol, n-pentadecanol, n-hexadecanol, n-octadecanol, etc.

Substituted monohydric and dihydric alcohols, such as 2-methoxy-1-ethanol (methylene glycol), can also be used. C₁-C₁₂ alcohols are preferably used in the process of the invention. In particular, methanol or ethanol is used as extraction agent. These extraction agents are cheap and readily available. Methanol is particularly suitable, because it has a low boiling point, so that traces of it present in the polyamide end product can be easily eliminated by evaporation. Mixtures of aliphatic alcohols can also be used as extraction agents. Furthermore, mixtures of water and one or more aliphatic alcohols can also be employed as extraction agents in the process according to the present invention. It is advantageous to use a mixture of methanol and water with a methanol/water molar ratio higher than 1:1. This extraction agent permits an efficient separation of the polyamide and is inexpensive.

The extraction is carried out at a temperature and pressure at which the polyamide readily dissolves in the extraction agent. The temperature used for the extraction is preferably not too high, because that would raise the risk of degradation of the polyamide. If the extraction agent is methanol and the polyamide to be recycled is polyamide-6, the extraction is preferably carried out at 110-150°C and in particular at 135-140°C. If methanol is used to extract and recycle polyamide-6,6, however, a higher extraction temperature should be used, namely 140-180°C, in particular 155-165°C.

It has appeared that polyamide-6,6 is insoluble or virtually insoluble in methanol at 135°C, at which temperature polyamide-6 is readily soluble in this extraction agent. This makes it possible to separate polyamide-6 from polyamide-6,6 in the process according to the present invention by conducting the extraction in two stages at increasing temperatures. The temperature used here for the extraction in the first stage is preferably 110-150°C and in particular 135-140°C, while the temperature used for the extraction in the second stage is 140-180°C, in particular 155-165°C. It is also possible - and in fact particularly favourable from the point of view of process technology - to extract both polyamide-6 and polyamide-6,6 at 140-180°C with methanol, and then to remove the two polyamides from this joint extract separately by controlled cooling. Polyamide-6,6 will precipitate out first and can be separated off, followed by the polyamide-6 fraction, precipitating out at a lower temperature.

It has also been found possible to separate effectively the dyes that are present in coloured carpet waste from the polyamide by the process according to the present invention. Many dyes dissolve in the extraction agent during the extraction stage and remain in solution when the extract is cooled to a temperature at which the polyamide is no longer soluble in the extraction agent, such as for example 25°C. The polyamide can subsequently be removed from the solution. These dyes can then be separated from the extraction agent in a known way, e.g. by partially or completely evaporating the latter or by adding to it a liquid that does not dissolve the dye. The dye can also be separated by extracting it with a solvent that is a better solvent for it than the extraction agent and which is immiscible or only slightly miscible with the extraction agent. The dye can also be separated from the extraction agent with the aid of an absorbent such as active carbon.

The pressure employed for the extraction is not very critical. The extraction is preferably carried out at an elevated pressure. The minimum pressure used depends on the vapour pressure of the extraction agent at the temperature of the extraction. If methanol is used as the extraction agent, the preferred pressure during the extraction is 0.2-2 MPa (gauge) and especially 0.5-1.5 MPa. It is particularly advantageous to choose the pressure in such a way that it is the same as the vapour pressure of the extraction agent at the temperature of the extraction. The pressure need not be controlled separately in such a case.

The carpet waste, which is often delivered in the form of rolls or bales of carpet, is preferably comminuted before the extraction. The carpet waste is comminuted by a known method, e.g. by cutting or grinding. The resulting carpet fragments are easily fed into a vessel in which the extraction takes place and in which they are thoroughly mixed with the extraction agent. These fragments preferably measure 0.5-20 cm² and especially 2-8 cm². A suitable size of the fragments makes for a good extraction and ensures that the pieces are not so small after extraction as to hamper their separation from the extract.

The vessel used for the extraction can have any desirable form, such as a column, tank or tube, and is preferably an autoclave. The carpet fragments are mixed with the extraction agent e.g. with the aid of a stirrer placed in the extraction vessel.

The ratio between the amount of alcohol and that of the carpet waste is preferably chosen according to the amount of polyamide in the carpet waste, but other factors, such as the size of the fragments of carpet waste, can also play a role here. The amount of extraction agent must be such that the viscosity of the solution is not too high during the extraction when all the polyamide has been dissolved. However, the amount of extraction agent is preferably kept as small as possible in order to minimize the amount of extraction agent to be recovered. The expert will find it easy to determine experimentally the right ratio between the extraction agent and the carpet waste for any kind of carpet waste and different extraction agents on the basis of the criteria given above. In the case of polyamide-6 carpet waste containing about 30 wt-% of polyamide-6 and methanol being used as alcohol, a suitable ratio by weight between the alcohol and the carpet waste is from 5 to 50, in particular from 5 to 20.

The time needed for extraction can also be easily determined experimentally by the expert. It will be chosen according to the type and amount of polyamide that is present in the carpet waste in question, the concentration in the extraction agent, the extraction agent, the temperature of extraction, and the degree of mixing effected in the extraction vessel. An extraction time of 60 min has been found to be right for methanol and polyamide-6, with the extraction being carried out in an autoclave at a temperature of 135-140°C.

After the extraction, the extract is freed from the solids in the extraction vessel. This can be achieved with any suitable solid/liquid separating device, such as a settling tank (sedimentation), a hydrocyclone, a centrifuge or a filter. This separation is conducted above the temperature at which the polyamide precipitates out of the extract. It is preferably done above 90°C and especially above 110°C. The substances that do not dissolve in the extraction agent at the temperature of the extraction will accumulate in the solids fraction. It has been found that these substances can include numerous substances that polyamide-containing carpet waste can contain, such as jute, polypropylene, fillers (e.g. calcium carbonate), rubber (e.g. styrene-butadiene rubber), polyurethane, polyvinyl chloride, acrylate or methacrylate copolymers (e.g. copolymers of acrylonitrile and acrylate or methacrylate esters), wool and polyesters (e.g. polyethylene terephthalate).

The extract, which is an alcoholic solution of polyamide, can be directly processed further as such. It is also possible to remove the polyamide from the extraction agent, e.g. by first precipitating it out and then separating the precipitated polyamide by a conventional method such as filtration. The polyamide can be precipitated either by adding a liquid that does not dissolve it, or by cooling the polyamide solution. The preferred way of separating the polyamide from the extraction agent is to cool the extract, so that the extraction agent can then be directly returned into the process. The shape of the precipitated polyamide particles obtained here can be controlled by varying the rate of cooling of the extract. Although the methods of separation discussed above are preferred here, any other known method can be similarly used to separate the extraction agent from the polyamide, such as the evaporation of the extraction agent, leaving the polyamide behind. The polyamide can be separated here either as a solid or as a melt, and the melt is then preferably processed further in an extruder and is pelletized.

The extraction agent is preferably recovered and returned into the process after the polyamide has been separated from it. If the extraction agent is separated from the polyamide by evaporation, it can be easily recovered by condensation, after which it is returned into the process. If the separation has been effected by cooling, the extraction agent can be returned to the extraction stage after warming if desired. If a liquid that does not dissolve polyamides has been added, this liquid should be separated from the extraction agent e.g. by distillation, after which both the extraction agent and the non-solvent can be returned into the process.

The recycled polyamides obtained in the process according to the present invention are free or very nearly free of any degradation. The relative viscosity (RV) of the polyamide recycled according to the present invention is generally at least 85% of the relative viscosity of the polyamide present in the carpet waste. This percentage, called RV retention here, is preferably at least 90%. The relative viscosity is determined in a solution in 96% sulphuric acid, using a polyamide concentration of 1 g/dl, and is a measure of the weight-average molecular weight of the polyamide.

The recycled polyamide can be further processed into polyamide products in the same way as directly polymerized 'new' polyamide, for example for producing engineering plastics or raw materials for fibres. The recycled polyamide can also be mixed with new polyamide.

The following examples serve to explain the process of the invention in more detail.

### Example I

75 g of waste carpet made of polyamide-6 (nylon 6) and comminuted to fragments measuring 4-6 cm² were placed in a 2-litre autoclave made of chromium-nickel steel and were stirred with 1125 ml of methanol at a temperature of 133°C and at a self-generated pressure of about 0.9 MPa. The material was a normal polyamide-6 carpet consisting of polyamide-6 pile and a backing layer comprising polypropylene fibres, styrene-butadiene rubber (SBR) and calcium carbonate. The material contained 31.1 wt-% of polyamide-6. After 1 h, the contents of the autoclave were passed through a filter that had been heated to 135°C. The solid retained on the filter was easy to collect and process. It is interesting to note that the polypropylene fibres derived from the carpet were visibly intact and separate from the pulverized styrene-butadiene rubber and the calcium carbonate powder. The extract was concentrated and evaporated to dryness under vacuum in a Rotavapor apparatus. The filter cake and the solid left behind in the autoclave were also dried under vacuum. The residue left behind after evaporating the methanolic extract weighed 23.0 g, and 99.8 wt-% of it was polyamide-6. The dried filter cake, weighing 51.0 g, only contained 0.2 wt-% of polyamide-6.

The relative viscosity (RV) of the recycled polyamide was 2.40 dl/g, against a value of 2.61 dl/g for the polyamide originally present in the carpet waste. The relative viscosity was determined in a solution in 96% sulphuric acid, using a polyamide concentration of 1 g/dl. The retention of relative viscosity (RV retention) was therefore 92.0%.

### Example II

The process described in Example I was repeated with 75 g of comminuted waste carpet made of polyamide-6,6 (nylon 6,6), containing 35% of polyamide-6.6. The material left behind on the filter was a more or less entangled mass. The dry weight of this solid fraction was found to be 71.1 g. The residue left behind after the evaporation of the extract amounted to 3.0 g and mainly consisted of polyamide-6,6. This example illustrates that polyamide-6,6 can be extracted only in a low yield (11%) when the material is dissolved at 133°C.

### Example III

Four samples of nylon 6 carpet fibres, each of a different colour, were obtained by unpicking the fibres from four nylon 6 carpets of different colours. 0.5 g of each sample was placed in a 60-ml Carius tube and mixed with 20 ml of methanol. The Carius tubes were then sealed and placed in an oven, where they were heated at 137°C for 1.5 h, with swirling at regular intervals.

After cooling the tubes, the nylon 6 that had dissolved separated out as a white powder. The dye from the carpet fibres dissolved in the methanol during the extraction and remained fully dissolved in it even after the solution had been cooled to 25°C.

### Example IV

The process described in Example III was repeated with four samples of nylon 6,6 carpets having different colours, and the Carius tubes were heated to 160°C for 1.5 h. The nylon 6,6 fibres dissolved in the methanol at 160°C almost completely, and the dissolved nylon 6,6 separated out as a white powder after cooling to 25°C.

Examples I-IV show that not only polyamide-6 can be extracted from carpet waste by the process according to the present invention but - at the higher extraction temperature of 160°C - also polyamide-6,6. Furthermore, polyamide can be efficiently separated from polypropylene, calcium carbonate, styrene-butadiene rubber, and acrylonitrile and methacrylate ester copolymers. Furthermore, dyes can be separated from polyamide. Polyamide-6 and polyamide-6,6 can be separated selectively by the use of different extraction temperatures.

## Claims

1. Process for recycling polyamide-containing carpet waste by extracting the polyamide from the carpet waste with an extraction agent and then recovering the polyamide from the extract, **characterized in that** the extraction agent used comprises an aliphatic alcohol, with the exception of an extraction agent which is an alcoholic solution of an alkaline earth halide.

2. Process according to claim 1, **characterized in that** the aliphatic alcohol is a C₁-C₁₂ alcohol.

3. Process according to claim 2, **characterized in that** the aliphatic alcohol is methanol, ethanol or propanol.

4. Process according to claim 3, **characterized in that** the alcohol is methanol.

5. Process according to any one of claims 1-4, **characterized in that** the extraction agent used is a mixture of aliphatic alcohol and water.

6. Process according to claim 5, **characterized in that** the alcohol/water molar ratio is greater than 1:1.

7. Process according to any one of claims 1-4, **characterized in that** carpet waste is extracted at a temperature of 100-150°C, and an extract of polyamide-6 is separated off.

8. Process according to any one of claims 1-4, **characterized in that** carpet waste is extracted at a temperature of 140-180°C, and an extract of polyamide-6,6 is separated off.

9. Process according to any one of claims 1-4, **characterized in that** polyamide-6 and polyamide-6,6 are separated from each other by conducting the extraction in two stages, with an increase in the temperature of extraction.

10. Process according to claim 7, **characterized in that** the extraction temperature is 110-150°C in the first stage and 140-180°C in the second stage.

11. Process according to claim 8, **characterized in that** the extraction temperature is 135-140°C in the first stage and 155-165°C in the second stage.

12. Process according to claim 6, **characterized in that** polyamide-6 and polyamide-6,6 are separated from each other by the controlled cooling of the extract, so that first a polyamide-6,6 fraction precipitates out, which is separated off, and then a polyamide-6 fraction precipitates out at a lower temperature and is then separated off.

## Patentansprüche

1. Verfahren zum Wiederverwerten von Polyamid-haltigem Teppichabfall durch Extrahieren des Polyamids von dem Teppichabfall mit einem Extraktionsmittel und dann Rückgewinnen des Polyamids von dem Extrakt, **dadurch gekennzeichnet, daß** das verwendete Extraktionsmittel einen aliphatischen Alkohol umfaßt, mit der Ausnahme eines Extraktionsmittels, welches eine alkoholische Lösung eines Erdalkalihalogenids ist.

2. Verfahren nach Anspruch 1, **dadurch gekennzeichnet, daß** der aliphatische Alkohol ein C₁-C₁₂ Alkohol ist.

3. Verfahren nach Anspruch 2, **dadurch gekennzeichnet, daß** der aliphatische Alkohol Methanol, Ethanol oder Propanol ist.

4. Verfahren nach Anspruch 3, **dadurch gekennzeichnet, daß** der Alkohol Methanol ist.

5. Verfahren nach einem der Ansprüche 1-4, **dadurch gekennzeichnet, daß** das verwendete Extraktionsmittel ein Gemisch eines aliphatischen Alkohols und Wasser ist.

6. Verfahren nach Anspruch 5, **dadurch gekennzeichnet, daß** das Molverhältnis von Alkohol/Wasser größer als 1:1 ist.

7. Verfahren nach einem der Ansprüche 1-4, **dadurch gekennzeichnet, daß** der Teppichabfall bei einer Temperatur von 100-150°C extrahiert wird und ein Extrakt von Polyamid-6 abgetrennt wird.

8. Verfahren nach einem der Ansprüche 1-4, **dadurch gekennzeichnet, daß** der Teppichabfall bei einer Temperatur von 140-180°C extrahiert wird und ein Extrakt von Polyamid-6,6 abgetrennt wird.

9. Verfahren nach einem der Ansprüche 1-4, **dadurch gekennzeichnet, daß** Polyamid-6 und Polyamid-6,6 durch das Durchführen der Extraktion in zwei Stufen mit einem Anstieg in der Extraktionstemperatur jeweils voneinander abgetrennt werden.

10. Verfahren nach Anspruch 7, **dadurch gekennzeichnet, daß** die Extraktionstemperatur 110-150°C in der ersten Stufe und 140-180°C in der zweiten Stufe beträgt.

11. Verfahren nach Anspruch 8, **dadurch gekennzeichnet, daß** die Extraktionstemperatur 135-140°C in der ersten Stufe und 155-165°C in der zweiten Stufe beträgt.

12. Verfahren nach Anspruch 6, **dadurch gekennzeichnet, daß** Polyamid-6 und Polyamid-6,6 jeweils voneinander durch das kontrollierte Abkühlen des Extrakts abgetrennt werden, so daß sich zunächst eine Polyamid-6,6-Fraktion abscheidet, welche abgetrennt wird, und dann sich eine Polyamid-6-Fraktion bei einer tieferen Temperatur abscheidet und dann abgetrennt wird.

## Revendications

1. Procédé pour recycler des déchets de tapis contenant du polyamide, par extraction du polyamide des déchets de tapis à l'aide d'un agent d'extraction, puis récupération du polyamide à partir de l'extrait, **caractérisé en ce que** l'agent d'extraction utilisé comprend un alcool aliphatique, à l'exception d'un agent d'extraction qui est une solution alcoolique d'un halogénure d'un métal alcalino-terreux.

2. Procédé selon la revendication 1, **caractérisé en ce que** l'alcool aliphatique est un alcool en C₁-C₁₂.

3. Procédé selon la revendication 2, **caractérisé en ce que** l'alcool aliphatique est le méthanol, l'éthanol ou le propanol.

4. Procédé selon la revendication 3, **caractérisé en ce que** l'alcool est le méthanol.

5. Procédé selon l'une quelconque des revendications 1 à 4, **caractérisé en ce que** l'agent d'extraction utilisé est un mélange d'un alcool aliphatique et d'eau.

6. Procédé selon la revendication 5, **caractérisé en ce que** le rapport en moles alcool/eau est supérieur à 1:1.

7. Procédé selon l'une quelconque des revendications 1 à 4, **caractérisé en ce que** les déchets de tapis sont extraits à une température de 100-150°C, et qu'un extrait de polyamide-6 est séparé.

8. Procédé selon l'une quelconque des revendications 1 à 4, **caractérisé en ce que** les déchets de tapis sont extraits à une température de 140-180°C, et qu'un extrait de polyamide-6,6 est séparé.

9. Procédé selon l'une quelconque des revendications 1 à 4, **caractérisé en ce que** polyamide-6 et poly-amide-6,6 sont séparés l'un de l'autre par mise en oeuvre de l'extraction en deux étapes, avec une augmentation de la température d'extraction.

10. Procédé selon la revendication 7, **caractérisé en ce que** la température d'extraction est de 110-150°C dans la première étape et de 140-180°C dans la deuxième étape.

11. Procédé selon la revendication 8, **caractérisé en ce que** la température d'extraction est de 135-140°C dans la première étape et de 155-165°C dans la deuxième étape.

12. Procédé selon la revendication 6, **caractérisé en ce que** polyamide-6 et polyamide-6,6 sont séparés l'un de l'autre par refroidissement régulé de l'extrait, de façon à d'abord provoquer la précipitation d'une frac-tion de polyamide-6,6, qui est séparée, puis on procède à la précipitation d'une fraction de polyamide-6 à une température plus basse, et on sépare cette fraction.
